Europäisches Patentamt

European Patent Office

Office européen des brevets

(19)

(11) Numéro de publication: **0 181 813**
**B1**

(12) **FASCICULE DE BREVET EUROPEEN**

(45) Date de publication du fascicule du brevet:
19.07.89

(51) Int. Cl.⁴: **G21C 11/08**

(21) Numéro de dépôt: 85402114.4

(22) Date de dépôt: 04.11.85

(54) **Réacteur nucléaire à neutrons rapides refroidi par un métal liquide et dont les structures internes sont équipées d'un dispositif de protection thermique.**

(30) Priorité: 08.11.84 FR 8416995

(43) Date de publication de la demande:
21.05.86 Bulletin 86/21

(45) Mention de la délivrance du brevet:
19.07.89 Bulletin 89/29

(84) Etats contractants désignés:
DE FR GB IT

(56) Documents cités:
FR-A- 2 220 847
FR-A- 2 260 743
FR-A- 2 315 054
GB-A- 967 238

NUCLEAR ENERGY,
vol. 20, no. 2, avril 1981, pages 189-196, Londres, GB;
J.D. BARRETT: "Operational and engineering
experience of a foil/mesh reactor internal insulation
system"

(73) Titulaire: COMMISSARIAT A L'ENERGIE ATOMIQUE,
31/33, rue de la Fédération, F-75015 Paris(FR)

(72) Inventeur: Lemercier, Guy, 67 av. de La Bourgade,
F-13610 Le-Puy-Ste-Reparade(FR)
Inventeur: Lions, Noel, 233 Montée de toutes Aures,
F-04100 Manosque(FR)

(74) Mandataire: Mongrédien, André et al, c/o
BREVATOME 25, rue de Ponthieu, F-75008 Paris(FR)

**Description**

La présente invention se rapporte à un réacteur nucléaire à neutrons rapides refroidi par un métal liquide et comprenant de façon connue une cuve principale remplie de métal liquide et contenant le coeur du réacteur, au moins un échangeur de chaleur, au moins une pompe pour faire circuler le métal liquide entre le coeur et l'échangeur, et des structures internes à la cuve pour séparer à l'intérieur de celle-ci une partie relativement chaude du métal liquide sortant du coeur d'une partie relativement froide du métal liquide sortant de l'échangeur.

Dans les réacteurs nucléaires de ce type, les structures internes se composent généralement d'une cuve interne pouvant prendre différentes formes (cylindrique, à redan, etc...) et de cheminées de passage pour les composants tels que les pompes et les échangeurs, lorsque ceux-ci se trouvent à l'intérieur de la cuve du réacteur. Ces structures internes sont généralement réalisées en acier inoxydable, chaudronné et mécano-soudé. Elles ont pour fonction de séparer le métal liquide relativement chaud sortant du coeur du réacteur du métal liquide relativement froid sortant des échangeurs. Lorsque le métal liquide est constitué par du sodium comme c'est généralement le cas, les températures correspondantes sont respectivement d'environ 550°C et 400°C.

Compte tenu du niveau moyen de température auquel se trouvent les structures internes du réacteur, et de la différence de température entre le métal liquide relativement chaud et le métal liquide relativement froid qui se trouvent de part et d'autre de celles-ci, les structures internes du réacteur sont soumises en fonctionnement normal et au cours des périodes transitoires (changements de régime du réacteur) à des problèmes de tenue mécanique.

En particulier, les structures internes du réacteur sont soumises à des phénomènes d'instabilité dûs aux pressions interne et externe, notamment en cas de séismes. Ces structures sont soumises en plus à des phénomènes de fatigue-fluage dûs à la différence de températures dans leur épaisseur entraînant la mise en compression de la face chaude.

Les solutions à ces deux problème principaux sont contradictoires. En effet, l'amélioration de la stabilité conduit à épaissir les structures alors que la limitation des effets du phénomène de fatigue-fluage demande au contraire de réduire l'écart de températures et, par conséquent, l'épaisseur de la structure. De plus, les contraintes induites par ces deux phénomènes ne sont pas indépendantes, mais interfèrent.

Dans le document FR-A 2 315 054, on à décrit un réacteur nucléaire à neutrons rapides du type défini précédemment, dans lequel les structures internes sont recouvertes, du côté du métal liquide relativement chaud, par un dispositif de protection thermique comprenant des plaques modulaires disposées côte à côte avec un jeu entre elles et épousant approximativement la forme des structures internes. Un tel dispositif améliore sensiblement la tenue du matériau (acier inoxydable austénitique par exemple) constituant ces structures en réduisant la température moyenne de ces structures et la différence de température dans l'épaisseur de celles-ci, évitant ainsi le phénomène de fatigue-fluage. Cependant, afin de remplir leur fonction de protection thermique, les plaques ont une structure complexe.

Au contraire, conformément à l'invention les plaques modulaires sont réalisées en un matériau homogène métallique, et présentent un rayon de courbure légèrement différent de celui des structures internes à protéger, de manière à emprisonner du métal liquide statique entre chacune des plaques modulaires et ces structures internes.

De préférence, chaque plaque est fixée sur les structures internes par un moyen de fixation placé à proximité du centre géométrique de ladite plaque.

La fixation des plaques sur les structures internes étant réalisée de préférence au moyen d'un goujon soudé par étincelage sur la face adjacente chaude des structures à protéger, une sécurité peut être prévue en cas de rupture de l'un des goujons. Cette sécurité peut être obtenue en fixant, notamment par soudage, une plaquette sur l'un des coins de chaque plaque, de telle sorte que cette plaquette recouvre en partie les plaques adjacentes.

Pour tenir compte de la géométrie des structures internes, certaines plaques doivent être galbées ou cintrées. Ainsi, les faces chaudes des structures internes présentant une courbure convexe (par exemple les cheminées de passage des composants tels que les pompes et les échangeurs) sont recouvertes par des plaques modulaires présentant un rayon de courbure légèrement inférieur à celui de ces faces convexes. Inversement, les faces chaudes des structures internes présentant une courbure concave (par exemple la partie supérieure cylindrique de la cuve interne) sont recouvertes par des plaques modulaires présentant un rayon de courbure légèrement supérieur à celui de ces faces concaves. Dans les deux cas, du métal liquide statique est emprisonné entre les plaques et les structures internes qui les supportent. On définit ainsi deux interfaces solide-liquide statique, qui ont pour effet de faire chuter de façon importante la température entre les plaques qui sont directement en contact avec le métal liquide relativement chaud et les structures internes proprement dites.

Les plaques sont seulement au contact avec les structures internes en certains points de leurs bords périphériques. Cela permet d'éviter que les coins des plaques baillent et que ces plaques soient sollicitées aux vibrations d'origine hydraulique.

Selon un autre aspect de l'invention, lorsque les structures internes comportent un redan traversé par la pompe et par l'échangeur et des cheminées de passage de ces derniers soudées sur le redan, chaque cheminé comportant une onde tournée vers la partie relativement froide du métal liquide, et par laquelle ladite cheminée est soudée sur le redan, les plaques modulaires fixées sur la cheminée pénètrent dans la cavité formée par cette onde du côté de la partie relativement chaude du métal liquide et les plaques modulaires fixées sur le redan ferment cette cavité.

On décrira maintenant, à titre d'exemple non limitatif, un mode de réalisation préféré de l'invention en se référant aux dessins annexés dans lesquels :

- la figure 1 est une vue schématique partielle représentant de face et en coupe un réacteur nucléaire à neutrons rapides dont la structure interne est équipée d'un dispositif de protection thermique conformément à l'invention ;

- la figure 2 est une vue en perspective éclatée représentant une partie de la structure interne du réacteur de la figure 1 équipée du dispositif de protection thermique selon l'invention ; et

- la figure 3 est une vue en coupe transversale d'une pièce de la structure interne du réacteur de la figure 1 équipée du dispositif de protection thermique selon l'invention.

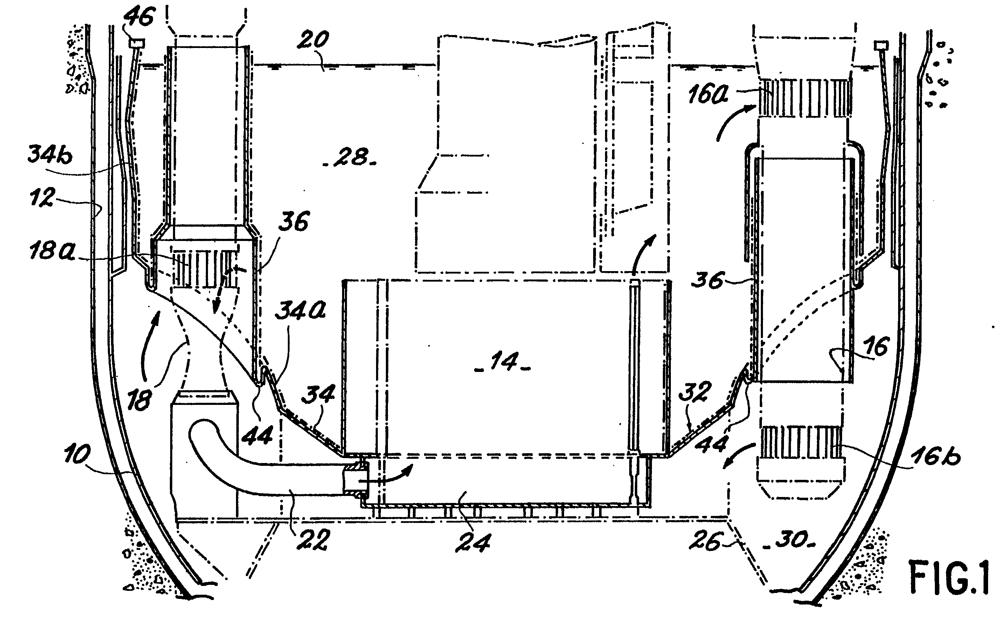

Le réacteur nucléaire à neutrons rapides représenté partiellement sur la figure 1 comprend de façon connue une cuve cylindrique, d'axe vertical, dite cuve principale 10 qui est reçue à l'intérieur d'un puits de cuve 12 formé dans un bâtiment de béton assurant la protection biologique de l'environnement. De façon connue, la cuve 10 peut être soit suspendue à la partie supérieure du puits de cuve 12, soit posée sur le fond de ce dernier. Une dalle de béton (non représentée) obture simultanément le puits de cuve 12 et la cuve 10 afin de compléter la protection biologique.

Dans le mode de réalisation représenté à titre préférentiel sur la figure 1, le réacteur est de type intégré, c'est-à-dire que la cuve principale 10 contient, outre le coeur 14 du réacteur, tous les composants du circuit primaire du réacteur parmi lesquels les principaux sont les échangeurs de chaleur 16 et les pompes primaires 18. Bien qu'un seul de chacun de ces composants soit représenté sur la figure 1, on sait que leur nombre peut être variable selon la puissance du réacteur.

Afin d'assurer le transfert de la chaleur dégagé par la matière fissile dans le coeur 14 du réacteur jusqu'aux échangeurs 16, la cuve principale 10 est remplie d'un métal liquide 20 généralement constitué par du sodium.

La circulation du métal liquide 20 entre le coeur 14 et les échangeurs 16 est assurée par les pompes 18 comme l'indiquent les flèches sur la figure 1. Le métal liquide relativement chaud sortant du coeur 14 à l'extrémité supérieure de celui-ci pénètre par des orifices d'entrée 16a dans chacun des échangeurs 16. Après avoir transmis la chaleur qu'il véhicule à un fluide secondaire généralement constitué par du sodium, le métal liquide primaire ressort des échangeurs 16 par des orifices de sortie 16b. Il est ensuite repris par les orifices d'aspiration 18a des pompes 18, qui refoulent ce métal liquide relativement froid, par des conduites 22, dans le sommier 24 d'alimentation et de supportage du coeur 14, disposé immédiatement en-dessous de celui-ci. Généralement, le sommier d'alimentation 24 repose lui-même sur le fond de la cuve 10 par l'intermédiaire d'une structure de supportage 26 appelée platelage.

Afin de tenir compte de la différence de température entre le métal liquide relativement chaud qui circule dans la cuve 10 entre le coeur 14 et les orifices d'entrée 16a des échangeurs (environ 550°C lorsqu'il s'agit de sodium) et le métal liquide relativement froid qui circule également dans la cuve entre les orifices de sortie 16b des échangeurs et les orifices 18a des pompes (environ 400°C pour du sodium), on est amené, pour des raisons hydrauliques et thermiques, à séparer le volume interne de la cuve principale 10 en deux volumes distincts, généralement appelés collecteur chaud 28 et collecteur froid 30, au moyen de structures internes 32.

Dans le mode de réalisation représenté sur la figure 1 dans lequel les composants principaux du circuit primaire que sont les échangeurs 16 et les pompes 18 sont placés directement à l'intérieur de la cuve principale 10, ces structures internes 32 se composent d'une cuve interne 34 et de cheminées 36 soudées à la cuve 34. Les cheminées 36 permettent aux composants de traverser la cuve interne tout en préservant la séparation entre le métal liquide relativement chaud contenu dans le collecteur chaud 28, situé généralement au-dessus du coeur 14 et le métal liquide relativement froid contenu dans le collecteur froid 30 et situé généralement à la périphérie du coeur 14.

Comme on a eu l'occasion de le mentionner précédemment, la cuve interne 34 peut prendre différentes formes. Dans le mode de réalisation préféré représenté sur la figure 1, cette cuve interne 34 comprend principalement une partie 34a en forme de redan, que traversent les pompes 18 et les échangeurs 16, et une virole externe 34b, sensiblement cylindrique, dont le bord supérieur s'élève à un niveau plus élevé que le niveau maximum du sodium 20 contenu dans le collecteur chaud 28 lors du fonctionnement des pompes 18. Les cheminées 36 sont raccordées sur la partie 34a de la cuve 34.

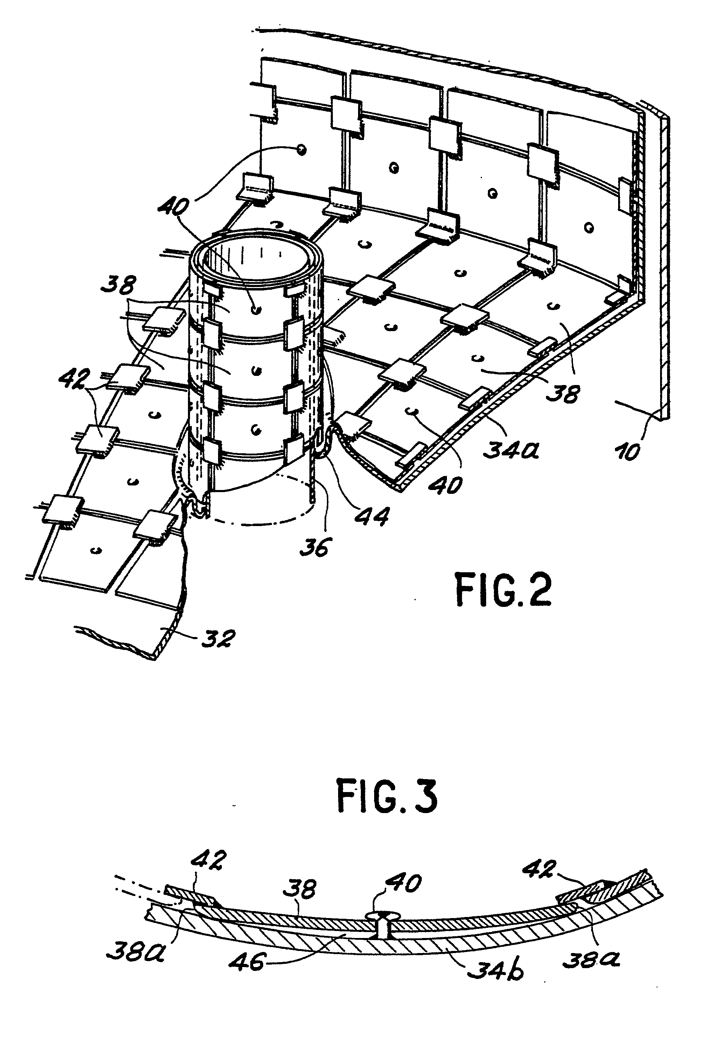

Conformément à l'invention et afin d'abaisser à la fois la température moyenne des structures internes 32 et la différence de température dans l'épaisseur de ces structures, pour conduire une meilleure tenue mécanique de celles-ci, les faces chaudes des structures internes 32, c'est-à-dire les faces de celles-ci situées du côté du collecteur chaud 28, sont recouvertes par un dispositif de protection thermique dont la structure va maintenant être décrite en détail en se référant aux figures 2 et 3. On remarquera que si le dispositif de protection thermique recouvre de préférence toutes les faces chaudes du redan 34a, de la virole externe 34b et des cheminées 36, il peut aussi être limité aux seules parties des structures 32 les plus chargées thermiquement, ou être ajusté en épaisseur en fonction des contraintes thermiques régnant au niveau des couronnes successives. Ainsi, les plaques d'une même couronne ont la même épaisseur, alors que les plaques de couronnes différentes ont des épaisseurs différentes.

Comme l'illustrent en particulier les figures 2 et 3, le dispositif de protection thermique qui recouvre les faces chaudes des structures internes 32 comprend des plaques ou tôles modulaires 38 disposées bout à bout avec un certain jeu entre elles et appliquées directement sur la surface à protéger en épousant approximativement la forme de cette surface. Ces plaques 38, qui jouent le rôle de baffles thermiques, sont réalisées en un matériau homogène métallique, et de préférence en acier inoxydable.

Selon la forme de la surface à protéger, les plaques 38 ont un module sensiblement carré ou trapézoïdal, dont la surface (par exemple voisine de 0,25 m²), permet de les manipuler manuellement. De façon générale, la forme des plaques 38 est conçue de façon à éviter les angles aigus, en particulier autour des cheminées 36 de passage des composants et pour s'adapter au mieux à la géométrie des structures internes. A cet effet, la fabrication de ces plaques peut être réalisée avantageusement à partir de gabarits. De plus, pour les formes simples telles que la virole externe 34b et les cheminées 36 de passage des composants, on peut envisager un module standard de plaques pour chaque catégorie de viroles. En ce qui concerne les plaques de protection du redan 34a, leur découpage peut être linéaire, compte tenu des grands rayons de courbure de celui-ci devant les dimensions relativement faibles des plaques.

En ce qui concerne le jeu qui est prévu entre les bords adjacents des plaques 38, il doit permettre les dilatations différentielles entre les plaques et les structures internes porteuses 32, tout en étant suffisamment limité pour qu'aucun courant de métal liquide chaud ne puisse s'instaurer entre les structures à protéger et les plaques 38. Etant donné que les dilatations différentielles entre les plaques et les structures porteuses sont faibles compte tenu des dimensions des plaques, on peut prévoir en pratique un jeu entre plaques de l'ordre de 3 à 4 mm intégrant les tolérances de fabrication.

Conformément à une autre caractéristique de l'invention, chacune des plaques 38 est fixée à la partie adjacente de la structure interne 32 à protéger par un moyen de fixation placé à proximité du centre géométrique (ou de gravité) de cette plaque. Comme l'illustre en particulier la figure 3, ce moyen de fixation est constitué de préférence par un goujon 40, soudé par étincelage sur la face chaude des structures 32 à protéger de façon à limiter son gradient thermique axial. Bien entendu, le diamètre du goujon 40 est dimensionné de façon à assurer sa tenue mécanique. Ce mode de supportage permet à chaque plaque de se dilater librement à partir du goujon 40 implanté au centre de celle-ci.

Comme on l'a représenté sur les figures 2 et 3, cette fixation des plaques 38 sur les structures 32 peut être doublée d'une structure de supportage de secours permettant de maintenir en place l'une des plaques 38 en cas de rupture de son goujon de fixation 40. Ce dispositif de supportage de secours comporte des plaquettes 42 qui sont fixées, de préférence par soudage, sur l'un des coins de chacune des plaques 38, de façon à recouvrir en partie les plaques adjacentes.

Ainsi, grâce à une disposition judicieuse de ces plaquettes, dans le cas préférentiel où l'on utilise des plaques 38 de forme sensiblement carrée, trois des coins de chacune de ces plaques sont recouverts par des plaquettes 42 soudées sur les plaques voisines, de sorte que cette plaque reste en place même dans l'hypothèse de la rupture de son goujon de supportage 40. A titre indicatif et nullement limitatif, la surface de chacune des plaquettes 42 est sensiblement dix fois plus faible que celle des plaques de protection 38.

Comme l'illustre en particulier la figure 2, l'implantation des plaques modulaires 38 est faite selon des anneaux ou des couronnes, en coordonnées cylindriques pour la protection des viroles cylindriques (viroles externes 34b et cheminées 36 des composants) et en coordonnés polaires pour le redan 34a. Compte tenu de la géométrie de ces structures, certaines des plaques 38 qui recouvrent le redan 34a doivent être galbées et certaines des plaques 38 qui recouvrent les viroles 34b et 36 doivent être cintrées.

Conformément à une caractéristique importante de l'invention, le rayon de courbure des plaques 38 est légèrement différent du rayon de courbure des parties de structures internes sur lesquelles ces plaques sont fixées, de manière à emprisonner entre chaque plaque et la partie de structure interne correspondante, du métal liquide statique. La présence de métal liquide statique entre les plaques 38 et la structure porteuse 32 permet de définir deux interfaces solide-liquide statique entre ces deux pièces. Compte tenu des propriétés de telles interfaces du point de vue de la conductivité thermique, on provoque ainsi une chute de température importante à chaque interface, entre les plaques 38 qui sont au contact du métal liquide contenu dans le collecteur chaud et la structure porteuse 32.

Cette caractéristique est illustrée par la figure 3 qui représente en coupe horizontale une partie de la virole 34b, dont la face interne chaude présente une courbure concave. Les plaques 38 présentent alors un rayon de courbure supérieur à celui de la face interne de la virole, leur face convexe étant tournée vers cette dernière, de façon à emprisonner du métal liquide statique 46 entre chaque plaque et la virole 34b. Seuls les bords périphériques 38a des plaques 38 sont alors en appui élastique sur la virole 34b, sous l'effet de la compression résultant de la fixation de la plaque sur la structure porteuse par le goujon 40. On évite ainsi que les plaques 38 ne baillent et qu'elles puissent être sollicitées par les vibrations d'origine hydraulique. De préférence, les arêtes des bords 38a en contact avec la structure porteuse 32 sont arrondies pour éviter les effets de coins lors de cyclages thermiques.

Bien entendu, la courbure des plaques 38 est adaptée en fonction de la courbure de la partie de la structure 32 qui supporte ces plaques.

Ainsi, la virole 34b étant considérée en coupe verticale, elle présente des génératrices rectilignes ou une courbure infinie. Considérées dans cette même direction, les plaques 38 présentent alors un rayon de courbure très grand, la face concave étant tournée vers la virole 34b.

Inversement, les plaques 38 qui sont portées par des parties de la structure 32 présentant sur leur face chaude une forme convexe, comme c'est notamment le cas pour les viroles 36 considérées en coupe horizontale, ont un rayon de courbure légèrement inférieur à celui de ces parties convexes, leurs faces concaves étant tournées vers les viroles 36.

L'épaisseur des plaques de protection thermique 38 est déterminée en fonction du chargement thermique initial, de façon que les contraintes et la tenue mécanique de l'ensemble de la structure soient admissibles quelles que soient les conditions de fonctionnement. Cette épaisseur des plaques, qui peut être calculée pour chaque partie de la structure interne 32 à protéger, peut être par exemple, selon le niveau des contraintes thermiques, de 5, 10 ou 15 mm pour une épaisseur de la structure interne de 30 mm.

De préférence, l'épaisseur maximale des plaques n'excède pas la moitié de l'épaisseur de la structure à protéger. Pour des plaques de 500 mm de côté, le jeu entre les bords adjacents des plaques peut être d'environ 2 mm.

Dans le mode de réalisation préféré représenté sur les figures 1 et 2, le raccordement des cheminées de passage 36 sur la virole 34a est réalisé par l'intermédiaire d'une onde 44 tournée vers le collecteur froid 30, de façon à réduire la température moyenne de cette région et à soulager les contraintes mécaniques qui sont généralement élevées à ce niveau.

Afin d'améliorer encore la tenue mécanique de cette région, la cavité formée par l'onde 44 et tournée du côté du collecteur chaud 28 est fermée par les plaques 38 qui assurent la protection thermique du redan 34a, de telle sorte que le métal liquide qui se trouve dans cette cavité est maintenu dans un état quasi-statique. De plus, les plaques 38 assurant la protection thermique des cheminées 36 se prolongent jusqu'à la partie inférieure de cette cavité.

Comme on l'a représenté en 46 sur la figure 1, une tablette de faible largeur (trois à quatre fois l'épaisseur de la virole) peut être soudée sur l'arête supérieure de la virole externe 34b de la cuve interne, afin d'améliorer sa rigidité.

Le dispositif de protection thermique des structures internes qui vient d'être décrit permet pour un encombrement minimum et pour une même épaisseur de ces structures internes, de réduire leur température moyenne, le gradient thermique dans leur épaisseur, ainsi que le gradient thermique axial pour les viroles et radial pour le redan durant les périodes transitoires de fonctionnement du réacteur, en particulier pour les viroles dans la zone de variation du niveau libre du métal liquide. Enfin la nouvelle conception de la liaison entre le redan 34a et les cheminées 36 permet de réduire les contraintes mécaniques dans les isthmes du redan entre les cheminées de composants et dans les liaisons de ces cheminées avec le redan. Toutes ces conditions améliorent sensiblement la tenue mécanique des structures internes en particulier vis-à-vis des problèmes de stabilité et de fatigue-fluage.

Il est à noter que l'invention s'applique quelle que soit la forme des structures internes. En particulier, la protection thermique selon l'invention peut être utilisée aussi bien dans le cas d'une cuve interne à redan comme on vient de le décrire, que dans le cas d'une cuve interne cylindrique ou de toute autre forme. De ce point de vue, l'invention n'est pas limitée à un réacteur de type intégré et s'applique également à un réacteur de type "à boucles", dans lequel les échangeurs et, éventuellement, les pompes, sont placés hors de la cuve principale.

## Revendications

1. Réacteur nucléaire à neutrons rapides refroidi par un métal liquide, comprenant une cuve (10) remplie de métal liquide et contenant le cœur (14) du réacteur, au moins un échangeur de chaleur (16), au moins une pompe (18) pour faire circuler le métal liquide (20) entre le cœur (14) et l'échangeur (16), et des structures internes (32) à la cuve (10) pour séparer à l'intérieur de celle-ci une partie relativement chaude (28) du métal liquide sortant du cœur (14) d'une partie relativement froide (30) du métal liquide sortant de l'échangeur (16), lesdites structures internes (32) étant recouvertes au moins partiellement, sur leur face en contact avec le métal liquide relativement chaud par un dispositif de protection thermique comprenant des plaques modulaires (38) disposées côte à côte avec un jeu entre elles et épousant approximativement la forme des structures internes (32), caractérisé en ce que les plaques modulaires (38) sont réalisées en un matériau homogène métallique et présentent un rayon de courbure légèrement différent de celui des structures internes à protéger, de manière à emprisonner du métal liquide statique entre chacune des plaques modulaires (38) et ces structures internes.

2. Réacteur selon la revendication 1, caractérisé en ce que chaque plaque (38) est fixée sur la structure interne (32) par un moyen de fixation (40) placé à proximité du centre géométrique de ladite plaque (38).

3. Réacteur selon la revendication 2, caractérisé en ce que ledit moyen de fixation est un goujon (40) soudé sur la face adjacente chaude des structures internes (32).

4. Réacteur selon l'une quelconque des revendications 1 à 3, caractérisé en ce que les plaques (38) sont disposées en couronnes, les plaques d'une même couronne ayant la même épaisseur et les plaques appartenant à des couronnes différentes ayant des épaisseurs différentes.

5. Réacteur selon l'une quelconque des revendications 1 à 4, caractérisé en ce que l'épaisseur des plaques (38) est au maximum égale à la moitié de l'épaisseur de la structure (32) à protéger.

6. Réacteur selon l'une quelconque des revendications 1 à 5, caractérisé en ce qu'une plaquette (42) est soudée sur l'un des coins de chaque plaque (38) de telle sorte que cette plaquette (42) recouvre en partie les plaques adjacentes.

7. Réacteur selon l'une quelconque des revendications 1 à 6, et dont les structures internes (32) comportent un redan (34a) traversé par la pompe (18) et par l'échangeur (16), et des cheminées (36) de passage de ces derniers soudées sur le redan (34a), chaque cheminée (36) comportant une onde (44) tournée vers la partie relativement froide (30) du métal liquide par laquelle ladite cheminée (36) est soudée sur le redan (34a), caractérisé en ce que l'onde (44) de chaque cheminée (36) forme du côté de la partie relativement chaude (28) une cavité dans laquelle pénètrent les plaques modulaires (38) fixées sur ladite cheminée (36), les plaques modulaires (38) fixées sur le redan (34a) fermant ladite cavité.

## Patentansprüche

1. Kernreaktor mit schnellen Elektronen, der durch ein flüssiges Metall gekühlt wird, enthaltend ein Gefäß (10), das mit flüssigem Metall gefüllt ist und den Kern (14) des Reaktors enthält, wenigstens einen Wärmetauscher (16), wenigstens eine Pumpe (18) zum Umwälzen des flüssigen Metalls (20) zwischen dem Kern (14) und dem Wärmetauscher (16), und innere Tragstrukturen (32) am Gefäß (10), um im Innern desselben einen relativ warmen Teil (28) des flüssigen Metalls, der den Kern (14) verläßt, von einem relativ kalten Teil (30) des flüssigen Metalls, der den Wärmetauscher (16) verläßt, zu trennen, wobei die inneren Tragstrukturen (32) wenigstens teilweise an ihrer Berührungsfläche mit dem relativ warmen flüssigen Metall durch eine thermische Schutzeinrichtung bedeckt sind, enthaltend Modulplatten (38), die Seite an Seite mit gegenseitigem Spiel angeordnet sind und sich etwa an die Gestalt der inneren Tragstrukturen (32) anschmiegen, dadurch gekennzeichnet, daß die Modulplatten (38) aus einem homogenen metallischen Material bestehen und einen Krümmungsradius aufweisen, der sich leicht von denen der inneren, zu schützenden Tragstrukturen unterscheidet, um das flüssige Metall statisch zwischen jeder der Modulplatten (38) und diesen inneren Tragstrukturen einzuschließen.

2. Reaktor nach Anspruch 1, dadurch gekennzeichnet, daß jede Platte (38) an der inneren Tragstruktur (32) durch eine Befestigungseinrichtung (40) befestigt ist, die in der Nähe des geometrischen Zentrums der genannten Platte (38) angeordnet ist.

3. Reaktor nach Anspruch 2, dadurch gekennzeichnet, daß die genannte Befestigungseinrichtung ein Stift (40) ist, der auf die benachbarte warme Seite der inneren Tragstrukturen (32) geschweißt ist.

4. Reaktor nach einem der Ansprüche 1 bis 3, dadurch gekennzeichnet, daß die Platten (38) in Kränzen angeordnet sind, wobei die Platten eines Kranzes gleiche Dicke aufweisen und die Platten, die zu anderen Kränzen gehören, andere Dicken aufweisen.

5. Reaktor nach einem der Ansprüche 1 bis 4, dadurch gekennzeichnet, daß die Dicke der Platten (38) maximal die Hälfte der Dicke der zu schützenden Tragstruktur (32) ist.

6. Reaktor nach einem der Ansprüche 1 bis 5, dadurch gekennzeichnet, daß ein Plättchen (42) auf eine der Ecken einer jeden Platte (38) derart geschweißt ist, daß dieses Plättchen (42) teilweise die benachbarten Platten überdeckt.

7. Reaktor nach einem der Ansprüche 1 bis 6, dessen innere Tragstrukturen einen schrägen Absatz (34a) aufweisen, der von der Pumpe (18) und von dem Wärmetauscher (16) durchquert wird, sowie Durchlaßkamine (36) der letzteren, die an dem schrägen Absatz (34a) angeschweißt sind, wobei jeder Kamin (36) eine Welle (44) aufweist, die gegen den relativ kalten Teil (30) des flüssigen Metalls gewendet ist und durch die der genannte Kamin (36) an dem schrägen Absatz (34a) angeschweißt ist, dadurch gekennzeichnet, daß die Welle (44) eines jeden Kamins (36) auf der Seite des relativ warmen Teils (28) eine Kammer bildet, in die die Modulplatten (38) eindringen, die an dem Kamin (36) befestigt sind, wobei die Modulplatten (38), die an dem schrägen Absatz (34a) befestigt sind, die genannte Kammer verschließen.

## Claims

1. Fast-neutron nuclear reactor cooled by a liquid metal, comprising a vessel (10) filled with liquid metal and containing the core (14) of the reactor, at least one heat exchanger (16), at least one pump (18) to cause the liquid metal (20) to circulate between the core (14) and the exchanger (16), and internal structures (32) in the vessel (10) to separate, within the latter, a relatively hot part (28) of the liquid metal leaving the core (14) from a relatively cold part (30) of the liquid metal leaving the exchanger (16), the said internal structures (32) being covered at least partially, on their face in contact with the relatively hot liquid metal, by a thermal protection device comprising modular plates (38) disposed side by side with a clearance between them and approximately espousing the shape of the internal structures (32), characterized in that the modular plates (38) are constructed of a homogeneous metallic material and exhibit a radius of curvature slightly different from that of the internal structures to be protected, in such a manner as captively to retain static liquid metal between each one of the modular plates (38) and these internal structures.

2. Reactor according to Claim 1, characterized in that each plate (38) is fixed on the internal structure (32) by a fixing means (40) located in proximity to the geometric centre of the said plate (38).

3. Reactor according to Claim 2, characterized in that the said fixing means is a pin (40) welded on the hot adjacent face of the internal structures (32).

4. Reactor according to any one of Claims 1 to 3, characterized in that the plates (38) are disposed in rings, the plates of a same ring having the same thickness and the plates belonging to different rings having different thicknesses.

5. Reactor according to any one of Claims 1 to 4, characterized in that the thickness of the plates (38) is at most equal to one half of the thickness of the structure (32) to be protected.

6. Reactor according to any one of Claims 1 to 5, characterized in that a small plate (42) is welded on one of the corners of each plate (38) in such a manner that this small plate (42) partly covers the adjacent plates.

7. Reactor according to any one of Claims 1 to 6, and the internal structures (32) of which comprise a step (34a) traversed by the pump (18) and by the exchanger (16), and vents (36) for passage of the latter, which vents are welded on the step (34a), each vent (36) comprising an undulation (44) turned towards the relatively cold part (30) of the liquid metal, by which the said vent (36) is welded on the step (34a), characterized in that the undulation (44) of each vent (36) forms, on the side of the relatively hot part (28), a cavity into which there penetrate the modular plates (38) fixed on the said vent (36), the modular plates (38) fixed on the step (34a) closing the said cavity.

FIG.1

EP 0 181 813 B1

FIG.2

FIG.3